(19) **Europäisches Patentamt**

**European Patent Office**

**Office européen des brevets**

(11) **EP 1 136 921 A1**

(12) **EUROPÄISCHE PATENTANMELDUNG**

(43) Veröffentlichungstag:
26.09.2001 Patentblatt 2001/39

(51) Int Cl.$^7$: **G06F 17/50**, H02P 21/00

(21) Anmeldenummer: 01102865.1

(22) Anmeldetag: 14.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.03.2000 DE 10014713**

(71) Anmelder: **Alstom**
**75116 Paris (FR)**

(72) Erfinder: **Janning, Jörg, Dr.**
**12049 Berlin (DE)**

(74) Vertreter: **Schäfer, Wolfgang, Dipl.-Ing.**
**Dreiss, Fuhlendorf, Steimle & Becker**
**Postfach 10 37 62**
**70032 Stuttgart (DE)**

(54) **Verfahren zur Regelung eines Synchron- oder Asynchron- motors**

(57) Es wird ein elektrisches Rechengerät zur Regelung eines Synchron- oder Asynchronmotors beschrieben, in dem der Synchron- oder Asynchronmotor mittels einer zeitdiskreten Differenzengleichung näherungsweise modelliert ist. Bei der Modellierung ist eine Tustin-Transformation der Ermittlung der Differenzengleichung zugrundegelegt.

Fig. 1

**Beschreibung**

Die Erfindung betrifft ein Verfahren zur Regelung eines Synchron- oder Asynchronmotors, bei dem der Synchron- oder Asynchronmotor mittels einer zeitdiskreten Differenzengleichung näherungsweise modelliert wird. Die Erfindung betrifft ebenfalls ein Rechengerät zur Regelung eines Synchron- oder Asynchronmotors.

Bei einer flußorientierten Regelung eines stromrichtergespeisten Synchron- oder Asynchronmotors ist es erforderlich, den momentanen Läufer- oder Ständerfluß zu ermitteln. Dies wird mit Hilfe eines zeitdiskreten mathematischen Modells des Synchron- oder Asynchronmotors durchgeführt, das dann in der Form von Differenzgleichungen vorliegt. Bei dieser Modellierung tritt unter anderem eine Transitionsmatrix auf, die nur mit einem großen Rechenaufwand ermittelt werden kann. Aus diesem Grund werden Näherungsverfahren für die Ermittlung der Differenzengleichungen angewendet.

Die Anwendung von Näherungsverfahren hat jedoch den Nachteil, daß die Modellierung des Synchron- oder Asynchronmotors weniger genau und/oder sogar instabil ist.

Aufgabe der Erfindung ist es, ein Verfahren und ein Rechengerät zur Regelung eines Synchron- oder Asynchronmotors zu schaffen, bei denen einerseits der Rechenaufwand in Grenzen bleibt, andererseits aber eine möglichst große Genauigkeit und Stabilität erreichbar ist.

Diese Aufgabe wird bei einem Verfahren der eingangs genannten Art erfindungsgemäß dadurch gelöst, daß eine Tustin-Transformation der Ermittlung der Differenzengleichung zugrundegelegt ist. Bei einem Rechengerät der eingangs genannten Art wird die Aufgabe entsprechend gelöst.

Durch die Verwendung der Tustin-Transformation wird eine äußerst große Genauigkeit bei der Modellierung des Synchron- oder Asynchronmotors erreicht. Gleichzeitig ist der Rechenaufwand für die Durchführung des Näherungsverfahrens bei der Verwendung der Tustin-Transformation relativ klein. Dies bedeutet, daß beide Ziele - große Genauigkeit und kleiner Rechenaufwand - bei Verwendung der Tustin-Transformation optimal erreichbar sind.

Insbesondere ist das erfindungsgemäße Tustin-Verfahren wesentlich genauer als ein Näherungsverfahren nach dem Runge-Kutta-Typ RK1 oder RK2. Erst ein Näherungsverfahren nach dem Runge-Kutta-Typ RK3 ist im Hinblick auf die Genauigkeit etwa vergleichbar mit dem Tustin-Verfahren. Dieses Näherungsverfahren RK3 erfordert jedoch einen wesentlich größeren Rechenaufwand als das erfindungsgemäße Tustin-Verfahren.

Besonders zweckmäßig ist es, wenn der Eingangsvektor der Differenzengleichung über eine Abtastzeitdauer als konstant zugrundegelegt ist. Damit ist es möglich, den Wert des neu zu berechnenden Eingangsvektors aus dem Tustin-Verfahren zu eliminieren.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

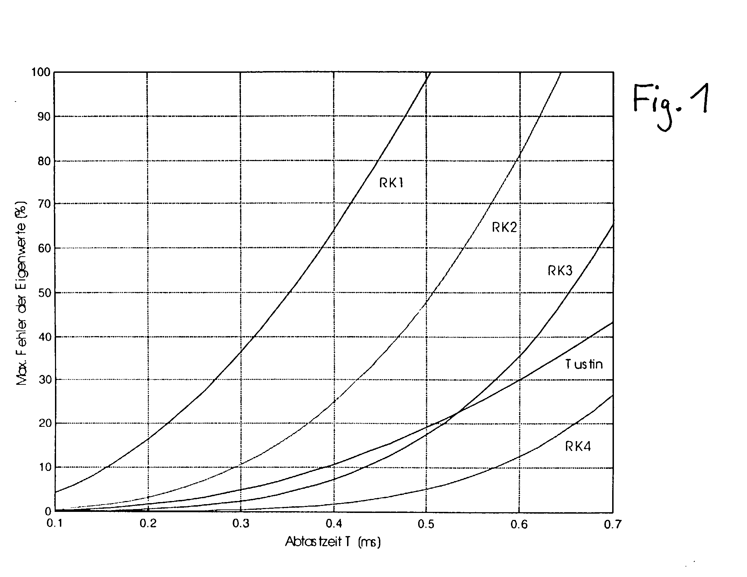

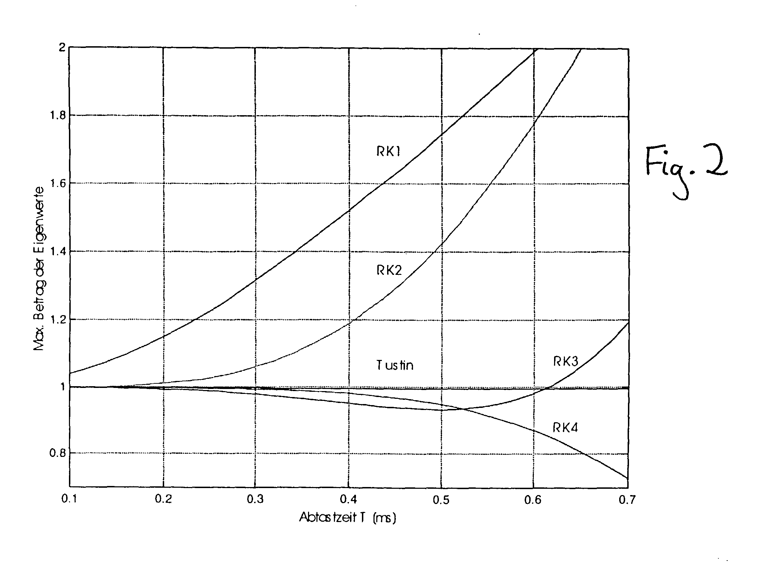

Figuren 1 und 2        zeigen schematische Diagramme zu einem Ausführungsbeispiel einer erfindungsgemäßen zeitdiskreten Modellierung eines Asynchronmotors.

Zur flußorientierten Regelung eines stromrichtergespeisten Synchron- oder Asynchronmotors ist es erforderlich, den momentanen Läufer- oder Ständerfluss zu ermitteln. Da eine Messung dieses momentanen Werts nicht mit vertretbarem Aufwand möglich ist, wird der Läufer- oder Ständerfluß in Abhängigkeit von einfach meßbaren Größen des Synchron- oder Asynchronmotors modelliert.

Ein exaktes mathematisches Modell eines Synchron- oder Asynchronmotors kann in der Form eines linearen zeitkontinuierlichen Differentialgleichungssystems wie folgt angegeben werden:

$$\dot{x}(t) = A(\omega_{rs}(t))x(t) + Bu(t)$$

$$y(t) = Cx(t)$$

mit

x(t) = Zustandsvektor
y(t) = Ausgangsvektor
$A(\omega_{rs}(t))$ = Systemmatrix
$\omega_{rs}(t)$ = Läuferdrehfrequenz

B = Eingangsmatrix

u(t) = Eingangsvektor

C = Ausgangmatrix.

Zur Regelung des Synchron- oder Asynchronmotors mittels eines Mikroprozessors ist es erforderlich, daß das vorstehende zeitkontinuierliche Differentialgleichungssystem mit einer Abtastzeitdauer $T_k$ disktretisiert wird. Die daraus resultierenden zeitdisktreten Differenzengleichungen können dann auf dem Mikroprozessor zyklisch berechnet werden.

Für die Diskretisierung des obigen Differentialgleichungssystems wird der Eingangsvektor u(t) jeweils für eine Abtastzeitdauer $T_k$ als konstant angenommen. Daraus ergeben sich die folgenden exakten zeitdiskreten Differenzengleichungen:

$$x(t_{k+1}) = \Phi(T_k)x(t_k) + H(T_k)u(t_k)$$

$$y(t_k) = Cx(t_k)$$

mit

$$\Phi(T_k) = \exp(A(\omega_{rs}(t_k))T_k)$$

$$\mathbf{H}(T_k) = \int_0^{T_k} \Phi(T_k - \tau)\mathbf{B}\,d\tau$$

Da die Transitionsmatrix $\Phi(T_k)$ von der Läuferdrehfrequenz $\omega_{rs}(t)$ abhängt, da die Abtastzeitdauer $T_k$ sich gegebenenfalls verändert, und da gegebenenfalls auch sonstige Größen des Synchron- oder Asynchronmotors adaptiert werden, ist es erforderlich, immer die momentanen Werte der Transitionsmatrix $\Phi(T_k)$ und der Eingangsmatrix $H(T_k)$ zu berechnen. Da die Transitionsmatrix $\Phi(T_k)$ und die Eingangsmatrix $H(T_k)$ jedoch nur mit großem Aufwand exakt zu berechnen sind, werden für deren Berechnung Näherungsverfahren angewendet.

Hierfür können Näherungsverfahren vom Runge-Kutta-Typ RK1, RK2, RK3 und RK4 wie folgt verwendet werden:

Euler-Cauchyscher Polygonzug (RK1):

$$X_{k+1} = (I + TA)x_k + TBu_k$$

Verbesserter Polygonzug (RK2):

$$\mathbf{x}_{k+1} = \left(\mathbf{I} + T\mathbf{A} + \frac{T^2}{2}\mathbf{A}^2\right)\mathbf{x}_k + \left(T\mathbf{I} + \frac{T^2}{2}\mathbf{A}\right)\mathbf{B}\mathbf{u}_k$$

Polygonzug nach Heun (RK3):

$$\mathbf{x}_{k+1} = \left(\mathbf{I} + T\mathbf{A} + \frac{1}{2}T^2\mathbf{A}^2 + \frac{1}{6}T^3\mathbf{A}^3\right)\mathbf{x}_k + \left(T\mathbf{I} + \frac{1}{2}T^2\mathbf{A} + \frac{1}{6}T^3\mathbf{A}^2\right)\mathbf{B}\mathbf{u}_k$$

Polygonzug nach Runge-Kutta (RK4):

$$\mathbf{x}_{k+1} = \left(\mathbf{I} + T\mathbf{A} + \frac{1}{2}T^2\mathbf{A}^2 + \frac{1}{6}T^3\mathbf{A}^3 + \frac{1}{24}T^4\mathbf{A}^4\right)\mathbf{x}_k + \left(T\mathbf{I} + \frac{1}{2}T^2\mathbf{A} + \frac{1}{6}T^3\mathbf{A}^2 + \frac{1}{24}T^4\mathbf{A}^3\right)\mathbf{B}\mathbf{u}_k$$

Bei den vorstehenden Näherungsverfahren ist die Genauigkeit umso größer, je aufwendiger die für das jeweilige Näherungsverfahren vorgesehene Gleichung ist. Gleichzeitig ist jedoch die Rechenzeit für die Durchführung des Näherungsverfahrens ebenfalls umso größer, je aufwendiger die für das jeweilige Näherungsverfahren vorgesehene Gleichung ist.

Eine Alternative zu den vorstehenden Näherungsverfahren vom Runge-Kutta-Typ stellt ein Näherungsverfahren mit Hilfe der Tustin-Transformation dar. Daraus ergibt sich folgende Differenzengleichung:

$$X_{k+1} = \Phi x_k + H_k \frac{1}{2}(u_{k+1} + u_k)$$

mit

$$\Phi_k = \left(I - \frac{T}{2}A\right)^{-1}\left(I + \frac{T}{2}A\right)$$

$$H_k = \left(I - \frac{T}{2}A\right)^{-1} TB$$

In der vorstehenden Gleichung für $x_{k+1}$ geht jeweils der Mittelwert von zwei abgetasteten Eingangsvektoren $u_k$ und $u_{k+1}$ ein. Der Eingangsvektor $u_{k+1}$ steht jedoch zum Zeitpunkt $t_k$, in dem die Gleichung für $x_{k+1}$ von dem Mikroprozessor berechnet wird, noch nicht zur Verfügung.

Es wird deshalb eine weitere Näherung vorgenommen, indem der Eingangsvektor $u_k$ für eine Abtastzeitdauer $t_k$ als konstant angenommen wird.

Aus dem Term 1/2 $(u_k+u_{k+1})$ der vorstehenden Gleichung für $x_{k+1}$ ergibt sich damit $u_k$. Damit vereinfacht sich die vorstehende Gleichung für $x_{k+1}$ wie folgt:

$$x_{k+1} = \Phi_k x_k + H_k u_k$$

Mit der vorstehenden vereinfachten Gleichung ist ein äußerst exaktes Näherungsverfahren - nachfolgend als Tustin-Verfahren bezeichnet - definiert, das gleichzeitig mit einem eher geringen Rechenaufwand durchführbar ist.

Zur Verdeutlichung der Unterschiede zwischen den beschriebenen Näherungsverfahren sind nachfolgend die Eigenwerte der exakt berechneten Transitionsmatrix $\Phi(T_k)$ mit den Eigenwerten der nach den Näherungsverfahren berechneten Transitionsmatrix $\Phi(T_k)$ miteinander verglichen. Es wird dabei jeweils nur die größte Abweichung der mit dem jeweiligen Näherungsverfahren berechneten Eigenwerte zu den exakten Eigenwerten betrachtet. Die Abweichungen der nach den Näherungsverfahren berechneten Eigenwerte von den nach den exakten zeitdiskreten Differenzengleichungen berechneten Eigenwerte sind als maximale Fehler der Eigenwerte bezeichnet.

In der Figur 1 sind die maximalen Fehler der Eigenwerte für die verschiedenen Näherungsverfahren in Abhängigkeit von der Abtastzeitdauer $T_k$ aufgetragen. Grundlage der Figur 1 ist dabei ein Asynchronmotor, der über als Stern angeordnete Eingangskondensatoren an einen Umrichter angeschlossen ist.

Aus der Figur 1 ist zu entnehmen, daß die Näherungsverfahren RK1 und RK2 bereits bei kleinen Abtastzeitdauern relativ große Fehler aufweisen. Das Näherungsverfahren RK3 ist bei kleinen Abtastzeitdauern mit dem Tustin-Verfahren vergleichbar. Bei großen Abtastzeitdauern ist der Fehler des Näherungsverfahrens RK3 jedoch wesentlich größer als bei dem Tustin-Verfahren. Schließlich ist das Näherungsverfahren RK4 genauer als das Tustin-Verfahren.

Ein weiteres, wesentliches Kriterium für die Beurteilung der beschriebenen Näherungsverfahren ist deren Stabilität. Ist ein von einem der Näherungsverfahren ermittelter Eigenwert größer als Eins, so bedeutet dies, daß das Näherungsverfahren nicht stabil ist.

In der Figur 2 sind die maximalen Beträge der Eigenwerte über der Abtastzeitdauer $T_k$ aufgetragen, wie sie sich mit Hilfe der beschriebenen Näherungsverfahren ergeben. Die Figur 2 hat dieselbe Grundlage wie die Figur 1, also einen Asynchronmotor, der über als Stern angeordnete Eingangskondensatoren an einen Umrichter angeschlossen ist.

Aus der Figur 2 ist ersichtlich, daß die Eigenwerte der Näherungsverfahren RK1 und RK2 alle größer als Eins sind. Die Näherungsverfahren RK1 und RK2 sind deshalb nicht stabil. Das Näherungsverfahren RK3 ist nur für Abtastzeitdauern $T_k$ stabil, die kleiner sind als etwa 0,6 ms. Für größere Abtastzeitdauern $T_k$ ist das Näherungsverfahren RK3 nicht stabil. Die Eigenwerte des Tustin-Verfahrens sind für alle dargestellten Abtastzeitdauern $T_k$ kleiner als Eins. Das Tustin-Verfahren ist damit stabil. Entsprechendes gilt auch für das Näherungsverfahren RK4.

Insgesamt ergibt sich damit aus den Figuren 1 und 2, daß das Tustin-Verfahren im Hinblick auf den maximalen Fehler der Eigenwerte, also bezüglich der Genauigkeit, sowie im Hinblick auf den maximalen Betrag der Eigenwerte, also bezüglich der Stabilität, etwa mit dem Näherungsverfahren RK3 vergleichbar ist.

Im Hinblick auf die erforderlichen Rechenzeiten für die Durchführung der verschiedenen Näherungsverfahren ist festzustellen, das das Tustin-Verfahren etwa denselben Rechenaufwand erfordert wie das Näherungsverfahren RK2. Das Näherungsverfahren RK3 erfordert jedoch einen größeren Rechenaufwand als das Tustin-Verfahren. Das Näherungsverfahren RK4 erfordert einen Rechenaufwand, der eine sinnvolle Realisierung - zumindest derzeit - nicht ermöglicht.

Bei einer Abtastzeitdauer $T_k$ von etwa 0,5 ms weisen das Tustin-Verfahren und das Näherungsverfahren RK3 etwa dieselben Eigenschaften im Hinblick auf ihren Fehler und ihre Stabilität auf. Das Tustin-Verfahren erfordert jedoch wesentlich weniger Rechenzeit.

Diese geringere Rechenzeit des Tustin-Verfahrens eröffnet die Möglichkeit, bei Verwendung des Tustin-Verfahrens eine kleinere Abtastzeitdauer $T_k$ zu wählen und damit insbesondere den Fehler des Tustin-Verfahrens weiter zu vermindern.

**Patentansprüche**

1. Verfahren zur Regelung eines Synchron- oder Asynchronmotors, bei dem der Synchron- oder Asynchronmotor mittels einer zeitdiskreten Differenzengleichung näherungsweise modelliert wird, **dadurch gekennzeichnet, daß** eine Tustin-Transformation der Ermittlung der Differenzengleichung zugrundegelegt ist.

2. Verfahren nach Anspruch 1, **dadurch gekennzeichnet, daß** der Eingangsvektor der Differenzengleichung über eine Abtastzeitdauer als konstant zugrundegelegt ist.

3. Verfahren nach einem der Ansprüche 1 oder 2, **dadurch gekennzeichnet, daß** die Differenzengleichung wie folgt lautet:

$$x_{k+1} = \Phi_k x_k + H_k u_k$$

mit

$\Phi_k$ = Transitionsmatrix
$H_k$ = Eingangsmatrix
$u_k$ = Eingangsvektor
$x_{k+1}$ = neuer Zustandsvektor
$x_k$ = alter Zustandsvektor.

4. Elektrisches Rechengerät zur Regelung eines Synchron- oder Asynchronmotors, in dem der Synchron- oder Asynchronmotor mittels einer zeitdiskreten Differenzengleichung näherungsweise modelliert ist, **dadurch gekennzeichnet, daß** eine Tustin-Transformation der Ermittlung der Differenzengleichung zugrundegelegt ist.

5. Rechengerät nach Anspruch 4, **dadurch gekennzeichnet, daß** der Eingangsvektor der Differenzengleichung über eine Abtastzeitdauer als konstant zugrundegelegt ist.

6. Rechengerät nach einem der Ansprüche 4 oder 5, **dadurch gekennzeichnet, daß** die Differenzengleichung wie folgt lautet:

$$x_{k+1} = \Phi_k x_k + H_k u_k$$

mit

$\Phi_k$ = Transitionsmatrix
$H_k$ = Eingangsmatrix
$u_k$ = Eingangsvektor
$x_{k+1}$ = neuer Zustandsvektor
$x_k$ = alter Zustandsvektor.

Fig. 1

EP 1 136 921 A1

Fig. 2

**Europäisches Patentamt**

# EUROPÄISCHER RECHERCHENBERICHT

Nummer der Anmeldung

EP 01 10 2865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | HUI S. Y. R. ET AL.: "DISCRETE-TIME SIMULATION OF AN INVERTER-FED SYNCHRONOUS MOTOR DRIVE" ELECTRIC MACHINES AND POWER SYSTEMS, Bd. 23, Nr. 1, Januar 1995 (1995-01) - Februar 1995 (1995-02), Seiten 81-91, XP000926380 USA * das ganze Dokument * | 1 | G06F17/50 H02P21/00 |
| A | VAN DEN BOSCH P. J. ET AL.: "MODELLING, CONTROL AND SIMULATION OF ELECTRICAL DRIVES" JOURNAL A, Bd. 31, Nr. 3, 1. September 1990 (1990-09-01), Seiten 37-42, XP000165774 Antwerp, Belgium * das ganze Dokument * | 1 | |
| A | VAN DEN BOSCH P. P. J. ET AL.: "HET SIMULEREN VAN CONTINUE SYSTEMEN" INFORMATIE, Bd. 17, Nr. 10, Oktober 1975 (1975-10), Seiten 497-506, XP000925990 Netherlands * Absätze [01.1],[0III] * | 1 | **RECHERCHIERTE SACHGEBIETE (Int.Cl.7)** H02P G06F |
| A | STOTEN D. P. ET AL.: "GENERATION OF DISCRETE AND CONTINIOUS TIME TRANSFER FUNCTION COEFFICIENTS" INTERNATIONAL JOURNAL OF CONTROL, Bd. 59, Nr. 5, Mai 1994 (1994-05), Seiten 1159-1172, XP000925991 UK * Absätze [001.],[004.],[005.],[05.3],[05.4],[006.], [06.1],[06.3],[6.4.3],[007.] * | 1 | |

Der vorliegende Recherchenbericht wurde für alle Patentansprüche erstellt

| Recherchenort | Abschlußdatum der Recherche | Prüfer |
|---|---|---|
| BERLIN | 18. Juli 2001 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)